# EUROPÄISCHE PATENTSCHRIFT

(11) **EP 3 539 816 B1**
(45) Veröffentlichungstag und Bekanntmachung des Hinweises auf die Patenterteilung: **21.07.2021**
(21) Anmeldenummer: 18020605.4
(22) Anmeldetag: 14.11.2018
(51) Int. Cl.: B60L 58/21, B60L 53/22, B60L 53/10, H02M 3/142, H02J 1/10

(54) **VERFAHREN ZUM LADEN EINES ENERGIESPEICHERS EINES FAHRZEUGS MIT EINER MODULAREN LADEVORRICHTUNG BEI HOHEM GESAMTWIRKUNGSGRAD**
METHOD FOR CHARGING AN ENERGY STORAGE DEVICE OF A VEHICLE WITH A MODULAR CHARGING DEVICE WITH HIGH OVERALL EFFICIENCY
PROCÉDÉ DE CHARGE D'UN ACCUMULATEUR D'ÉNERGIE D'UN VÉHICULE À L'AIDE D'UN DISPOSITIF DE CHARGE MODULAIRE À DEGRÉ DE RENDEMENT ÉLEVÉ

(30) Priorität: 14.03.2018 DE 102018105841
(43) Veröffentlichungstag der Anmeldung: 18.09.2019
(73) Patentinhaber: Dr.Ing. h.c. F. Porsche Aktiengesellschaft, 70435 Stuttgart (DE)
(72) Erfinder: Metzger, Christian, 71732 Tamm (DE); Hähre, Karsten, 67373 Dudenhofen (DE); de Jongh, Steven, 75203 Königsbach-Stein (DE); Jankovic, Marija, 70499 Stuttgart (DE)

(56) Entgegenhaltungen:
- EP-A1- 2 485 349
- EP-A1- 2 624 400
- EP-A1- 3 088 989
- EP-A2- 1 143 591
- EP-A2- 1 578 010
- WO-A1-2013/104409
- WO-A1-2017/094247
- US-A- 6 154 381
- US-A- 6 166 934
- US-A1- 2013 085 623
- US-A1- 2018 050 597

## Beschreibung

Die Erfindung betrifft ein Verfahren zum Laden eines Energiespeichers eines Fahrzeugs mit einer Ladevorrichtung, die in einem Arbeitspunkt einen Ladestrom und eine Ladespannung bereitstellt, wobei die Ladevorrichtung mehrere parallel geschaltete Energieversorgungsmodule aufweist.

Das Verfahren kann beispielsweise zum Laden von Elektrofahrzeugen oder Plug-In-Hybrid-Fahrzeugen Anwendung finden.

Bei einer Ladevorrichtung der eingangs genannten Art sind mehrere Energieversorgungsmodule parallelgeschaltet, so dass sich die von den Energieversorgungsmodulen bereitgestellten Ausgangsströme zu dem Ladestrom der Ladevorrichtung addieren. Der Wirkungsgrad eines Energieversorgungsmoduls hängt von dem Ausgangsstrom des jeweiligen Energieversorgungsmoduls und der Ladespannung der Ladevorrichtung ab. Verändert sich nun der Ladestrom bzw. die Ladespannung während des Ladens des Energiespeichers, so ändert sich auch der Gesamtwirkungsgrad der Ladevorrichtung.

Aus der EP 2 624 400 A1 ist ein Verfahren zum Laden einer Batterie bekannt, bei dem durch einen Algorithmus ein optimaler Betriebspunkt der Lademodule bestimmt wird. Aus der US 2018/0050597 A1 ist eine Vorrichtung bekannt, bei der mehrere Batteriezellen mit Gleichstromwandlern verbunden sind, die jeweils so betrieben werden, dass die Batteriezellen möglichst gleichmäßig entladen werden. Weiterhin wird in der WO 2013/104409 A1 wird ein Verfahren beschrieben, bei dem eine Mehrzahl von netzanschlussseitigen Umrichtern derart zu- oder abgeschaltet werden, dass die insgesamt übertragende elektrische Leistung von einer möglichst geringen Anzahl an netzanschlussseitigen Umrichtern bereitgestellt wird. Stromversorgungseinrichtungen mit parallel geschalteten Modulen sind weiterhin aus den Druckschriften WO 2017/094247 A1, EP 2 485 349 A1, EP 3 088 989 A1, EP 1 578 010 A2, EP 1 143 591 A2, US 6 166 934 A und US 6 154 381 A bekannt.

Grundsätzlich ist es wünschenswert, die Ladevorrichtung derart zu betreiben, dass ihr Gesamtwirkungsgrad möglichst hoch ist. Vor diesem Hintergrund stellt sich die Aufgabe, einen Betrieb einer Ladevorrichtung mit mehreren parallelgeschalteten Energieversorgungsmodulen bei hohem Gesamtwirkungsgrad zu ermöglichen.

Vorgeschlagen wird zur Lösung der Aufgabe ein Verfahren gemäß Anspruch 1. Erfindungsgemäß werden in dem Optimierungsschritt mehrere mögliche Arbeitspunkte der Ladevorrichtung betrachtet, d.h. mehrere Kombinationen aus Ladestrom und Ladespannung. Für die betrachteten Arbeitspunkte wird jeweils eine Verteilung des Ladestroms auf die einzelnen Energieversorgungsmodule bestimmt, bei welcher der Gesamtwirkungsgrad der Ladevorrichtung, d.h. der Wirkungsgrad der Parallelschaltung der Energieversorgungsmodule, maximal ist. In dem Ladeschritt erfolgt dann in Abhängigkeit von dem gewünschten Arbeitspunkt, d.h. in Abhängigkeit von dem gewünschten Ladestrom und der gewünschten Ladespannung, eine Auswahl der Verteilung, die für diesen Arbeitspunkt im Optimierungsschritt ermittelt worden ist. Auf diese Weise kann der Betrieb der Ladevorrichtung beim Laden des Energiespeichers des Fahrzeugs, beispielsweise einer Batterie oder eines Akkumulators, stets mit hohem Gesamtwirkungsgrad erfolgen.

Erfindungsgemäß wird der Optimierungsschritt durchgeführt, bevor das Laden des Energiespeichers erfolgt, d.h. bevor der Energiespeicher mit der Ladevorrichtung verbunden wird. Insofern kann der Optimierungsschritt vorab durchgeführt werden, so dass während des eigentlichen Ladens in dem Ladeschritt lediglich eine Auswahl aus den vorab bestimmten Strom-Verteilungen erfolgen kann.

Erfindungsgemäß ist es vorgesehen, dass in einem dem Optimierungsschritt vorhergehenden Approximationsschritt eine Approximation des Wirkungsgrads eines einzelnen Energieversorgungsmoduls in Abhängigkeit von einer Ausgangsspannung und einem Ausgangsstrom des Energieversorgungsmoduls ermittelt wird. Durch die Bereitstellung dieser Approximation wird es möglich, für beliebige Kombinationen von Ausgangsspannung und Ausgangsstrom eines einzelnen Energieversorgungsmoduls einen näherungsweisen Wirkungsgrad des Energieversorgungsmoduls anzugeben.

Die Approximation in dem Approximationsschritt erfolgt dabei mittels linearer Approximation oder quadratischer Approximation oder kubischer Approximation.

Gemäß einer vorteilhaften Ausgestaltung ist vorgesehen, dass in einem dem Approximationsschritt vorhergehenden Messschritt der Wirkungsgrad des Energieversorgungsmoduls für mehrere Modularbeitspunkte ermittelt wird, wobei die Modularbeitspunkte jeweils eine Ausgangsspannung und einen Ausgangsstrom des Energieversorgungsmoduls umfassen. Der Wirkungsgrad des Energieversorgungsmoduls kann als Quotient von Ausgangsleistung und Eingangsleistung des Energieversorgungsmoduls bestimmt werden. Der Messschritt wird bevorzugt als Teil eines dem aktuellen Ladeschritt vorhergehenden Ladevorgangs, beispielsweise beim vorhergehenden Laden eines anderen Energiespeichers eines anderen Fahrzeugs, durchgeführt, Optional kann der in dem Messschritt ermittelte Wirkungsgrad des Energieversorgungsmoduls für mehrere Modularbeitspunkte in einem Modulspeicher des Energieversorgungsmoduls gespeichert werden. Um den Speicherbedarf zu reduzieren, können in dem Messchritt Stützstellen, z. B. für eine Newton-Approximation, in dem Modulspeicher gespeichert werden.

Erfindungsgemäß ist es vorgesehen, dass im Optimierungsschritt als Startpunkt für die Optimierung eine Anzahl aktiver Energieversorgungsmodule ermittelt wird, wobei die aktiven Energieversorgungsmodule einen identischen Ausgangsstrom aufweisen Im Optimierungsschritt wird dann ausgehend von der ermittelten Anzahl aktiver Energieversorgungsmodule die Verteilung des Ladestroms auf die aktiven Energieversorgungsmodule mittels eines Gradientenverfahrens ermittelt. Die Aufteilung des Ladestroms auf eine ermittelte Anzahl von aktiven Energieversorgungsmodulen zu gleichen Teilen wird dabei als Startpunkt genutzt. Ausgehend von diesem Startpunkt wird die Verteilung des Ladestroms auf die einzelnen Energieversorgungsmodule durch das Gradientenverfahren optimiert.

Gemäß einer vorteilhaften Ausgestaltung ist vorgesehen, dass in dem Optimierungsschritt eine Tabelle angelegt wird, die eine Verteilung des Ladestroms auf die parallel geschalteten Energieversorgungsmodule für verschiedene Arbeitspunkte umfasst, wobei die Auswahl in dem Ladeschritt anhand der Tabelle erfolgt. Insofern kann in der Tabelle für jeden Arbeitspunkt eine Verteilung des Ladestroms auf die einzelnen Energieversorgungsmodule gespeichert werden, bei der ein maximaler Gesamtwirkungsgrad der Ladevorrichtung erreicht werden kann. In dem Ladeschritt ist eine Berechnung nicht erforderlich. Vielmehr kann in Abhängigkeit von dem gewünschten Arbeitspunkt eine entsprechende Verteilung des Ladestroms auf die einzelnen Energieversorgungsmodule aus der Tabelle ausgelesen und eingestellt werden. Die in der Tabelle gespeicherten Verteilung kann für jedes Energieversorgungsmodul einen dem Energieversorgungsmodule zugewiesenen Teil-Ladestrom umfassen, wobei die Teil-Ladeströme identisch oder verschieden sind. Die Verwendung einer solchen Tabelle erfordert zwar einen gewissen Speicheraufwand, bringt aber den Vorteil mit sich, dass in dem Ladeschritt nur ein geringer Rechenaufwand entsteht.

Gemäß einer alternativ vorteilhaften Ausgestaltung ist vorgesehen, dass in dem Ladeschritt die Auswahl der Verteilung des Ladestroms auf die einzelnen Energieversorgungsmodule mittels eines Klassifizierers, insbesondere eines Entscheidungsbaum-Klassifizierers, erfolgt. Beispielsweise kann der Klassifizierer eine Anzahl aktiver Energieversorgungsmodule ermitteln, insbesondere wobei die aktiven Energieversorgungsmodule einen identischen Ausgangsstrom aufweisen. Bevorzugt wird der Klassifizierer in einem Trainingsschritt zwischen dem Optimierungsschritt und dem Ladeschritt trainiert,

Gemäß einer vorteilhaften Ausgestaltung wird in dem Ladeschritt der tatsächliche Gesamtwirkungsgrad der Ladevorrichtung ermittelt. Zur Ermittlung des Gesamtwirkungsgrad der Ladevorrichtung kann eine Messung des Ladestroms und der Ladespannung erfolgen. Zudem können Eingangsspannungen und Eingangsströme der paralleigeschalteten Energieversorgungsmodule gemessen werden. Durch die Ermittlung des tatsächlichen Gesamtwirkungsgrad der Ladevorrichtung wird es möglich, eine Differenz zwischen dem in dem Optimierungsschritt ermittelten Maximum des Gesamtwirkungsgrad und dem tatsächlichen Gesamtwirkungsgrad zu bestimmen.

Gemäß einer vorteilhaften Ausgestaltung wird in dem Ladeschritt der tatsächliche Wirkungsgrad der einzelnen Energieversorgungsmodule ermittelt. Zur Ermittlung des Wirkungsgrads der einzelnen Energieversorgungsmodule kann eine Messung des Ausgangsstroms und der Ausgangsspannung der Energieversorgungsmodule erfolgen. Zudem können Eingangsspannungen und Eingangsströme der parallelgeschalteten Energieversorgungsmodule gemessen werden. Alternativ können mehrere Messungen des Ladestroms und der Ladespannung der Ladevorrichtung erfolgen, wobei unterschiedliche Energieversorgungsmodule aktiviert sind und aus diesen Messungen der Ausgangsstrom und die Ausgangsspannung bzw. der Wirkungsgrad der einzelnen Energieversorgungsmodule ermittelt werden. Durch die Ermittlung des tatsächlichen Wirkungsgrads der Energieversorgungsmodule wird es möglich, die Güte der einzelnen Energieversorgungsmodule zu ermitteln und/oder ein Alterungsverhalten der einzelnen Energieversorgungsmodule zu beobachten und/oder mögliche Ausfälle einzelner Energieversorgungsmodule vorherzusagen.

Bevorzugt weisen die parallelgeschalteten Energieversorgungsmodule einen Gleichspannungswandler (engl. DC-DC Converter) auf. Über einen Ausgang des Gleichspannungswandlers kann der Ausgangsstrom und die Ausgangsspannung des Energieversorgungsmoduls abgegeben werden.

Bevorzugt können die Energieversorgungsmodule einen Ausgangsstrom im Bereich von 0 A bis 100 A, besonders bevorzugt von 0 A bis 50 A abgeben. Bevorzugt ist die Ausgangsspannung der Energieversorgungsmodule, und damit die Ladespannung, in einem Bereich zwischen 0 V ) und 1 000 V, beispielsweise in einem Bereich zwischen 0 V und 950 V, einstellbar.

Weitere Einzelheiten und Vorteile des erfindungsgemäßen Verfahrens sollen nachfolgend anhand der in den Figuren gezeigten Ausführungsbeispiele beschrieben werden. Hierin zeigt:
- Fig. 1: eine modulare Ladevorrichtung zum Laden eines Energiespeichers eines Fahrzeugs in einem Blockdiagramm;
- Fig. 2: ein Diagramm des Wirkungsgrads eines Energieversorgungsmoduls der Ladevorrichtung aus Fig. 1 in Abhängigkeit von Ausgangsspannung und Ausgangsstrom des Energieversorgungsmoduls;
- Fig. 3-4: Ablaufdiagramme der Verfahrensschritte eines Verfahrens zum Laden eines Energiespeichers eines Fahrzeugs, die vor dem Laden durchgeführt werden;
- Fig. 5: ein Ablaufdiagramm des Ladeschritts eines Verfahrens zum Laden eines Energiespeichers eines Fahrzeugs;
- Fig. 6: ein exemplarischer Wirkungsgrad eines Energieversorgungsmoduls in Abhängigkeit von Ausgangsspannung und Ausgangsstrom in einem Diagramm;
- Fig. 7: eine lineare Approximation des Wirkungsgrads aus Fig. 6;
- Fig. 8: eine quadratische Approximation des Wirkungsgrads aus Fig. 6;
- Fig. 9: eine kubische Approximation des Wirkungsgrads aus Fig. 6;
- Fig. 10: eine dreidimensionale Darstellung einer Tabelle, die eine Verteilung des Ladestroms auf die parallel geschalteten Energieversorgungsmodule für verschiedene Arbeitspunkte umfasst;
- Fig. 11: ein Testplan zur Ermittlung des Wirkungsgrads eines Energieversorgungsmoduls anhand von Messungen des Ladestroms und der Ladespannung der Ladevorrichtung.

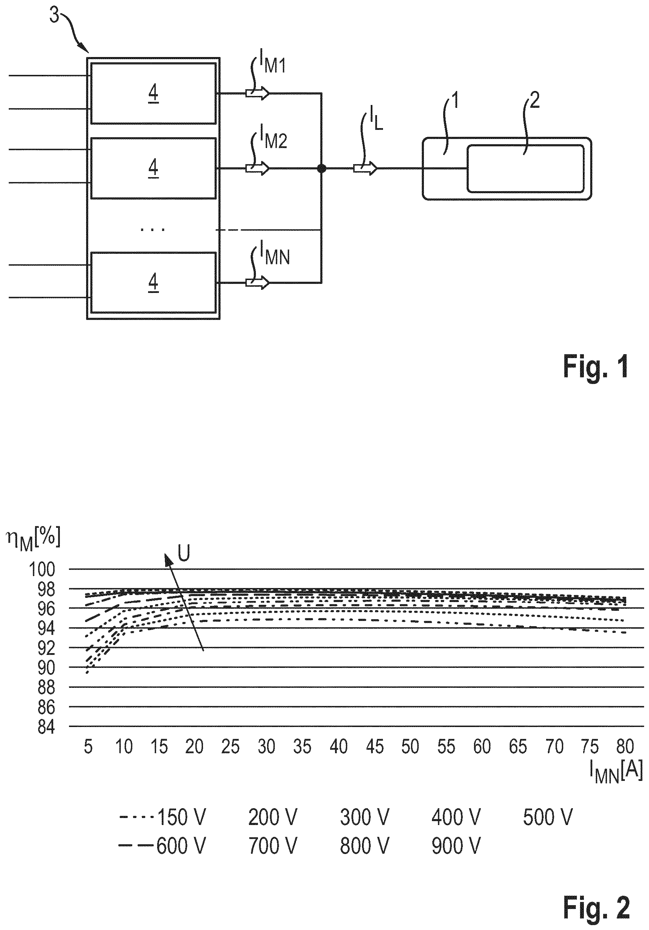

In der Fig. 1 ist ein Blockdiagramm eines Ausführungsbeispiels einer Ladevorrichtung 3 dargestellt, die geeignet ist, einen Energiespeicher 2 eines Fahrzeugs 1, beispielsweise eines Elektrofahrzeugs oder eines Plug-In-Hybrid-Fahrzeugs, zu laden. Die Ladevorrichtung 3 weist mehrere baugleiche Energieversorgungsmodule 4 auf, die parallelgeschaltet sind. Die Energieversorgungsmodule 4 umfassen jeweils einen Gleichspannungswandler, über dessen Ausgang ein Ausgangsstrom I_{M1}, I_{M2}, I_{MN} und eine Ausgangsspannung U bereitgestellt werden. Insofern kann die Ladevorrichtung 4 zum Laden des Energiespeichers 2 einen als Gleichstrom ausgebildeten Ladestrom I_{L} bereitstellen, welcher der Summe der Ausgangsströme I_{M1,} I_{M2}, I_{MN} der Energieversorgungsmodule 4 entspricht. Die Ladevorrichtung 3 gemäß dem Ausführungsbeispiel ist als Gleichspannungs-Hochleistungsladevorrichtung ausgestaltet und kann einen Ladestrom I_{L} im Bereich von 0 A bis 500 A bei einer Ladespannung U von 0 V bis 1000 V bereitstellen.

In der Fig. 2 ist beispielhaft der Wirkungsgrad η_{N} eines Energieversorgungsmoduls 4 in Abhängigkeit von dem Ausgangsstrom I_{MN} und der Ausgangs- bzw. Ladespannung U dargestellt. Es lässt sich erkennen, dass der Wirkungsgrad η_{N} mit steigendem Ausgangsstrom I_{MN} zunächst ein Maximum annimmt und dann bei weiterer Erhöhung des Ausgangsstroms I_{MN} abnimmt. Zudem steigt der Wirkungsgrad η_{N} mit steigender Ausgangs- bzw. Ladespannung U.

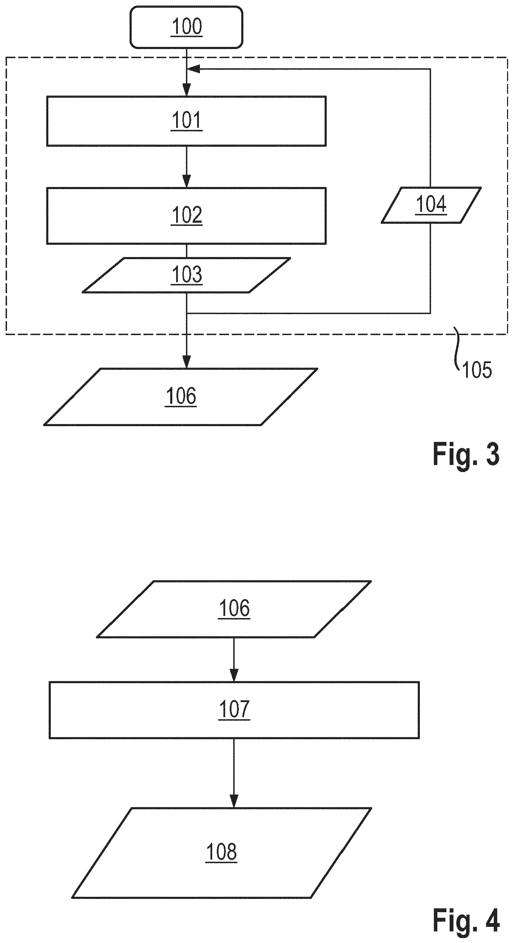

Da es beim Betrieb der Ladevorrichtung 3 wünschenswert ist, dass ihr Gesamtwirkungsgrad möglichst hoch ist, wird die Ladevorrichtung 3 mit einem Verfahren gemäß einem Ausführungsbeispiel der Erfindung betrieben. Bei diesem Verfahren wird in einem Optimierungsschritt für mehrere vorgegebene Arbeitspunkte jeweils eine Verteilung des Ladestroms I_{L} auf die parallel geschalteten Energieversorgungsmodule 4 ermittelt, bei welcher die Ladevorrichtung 3 einen maximalen Gesamtwirkungsgrad aufweist. In einem dem Optimierungsschritt nachfolgenden Ladeschritt wird dann in Abhängigkeit von einem vorgegebenen Ladestrom I_{L} und einer vorgegebenen Ladespannung U eine Verteilung des Ladestroms I_{L} auf die einzelnen Energieversorgungsmodule 4 der Ladevorrichtung 3 ausgewählt, bei welcher die Ladevorrichtung 3 einen maximalen Gesamtwirkungsgrad aufweist, Dieses Verfahren soll nachfolgend anhand der Darstellungen in Fig. 3,4 und 5 erläutert werden.

Die Fig. 3 zeigt in einem ersten Ablaufdiagramm einen Optimierungsschritt 105 des Verfahrens, der bevorzugt vor dem eigentlichen Laden des Energiespeichers 2 durchgeführt wird. Das bedeutet, dass dieser Verfahrensschritte durchgeführt werden kann, bevor eine elektrische Verbindung zwischen der Ladevorrichtung 3 und dem Energiespeicher 2 des Fahrzeugs 1 hergestellt wird. Vor diesem Optimierungsschritt 105 wird ein in Fig. 3 nicht dargestellter Approximationsschritt durchgeführt, in welchem eine Approximation des Wirkungsgrads η_{N} eines einzelnen Energieversorgungsmoduls 4 in Abhängigkeit von der Ausgangsspannung U und dem Ausgangsstrom I_{MN} des Energieversorgungsmoduls 4 ermittelt wird. In einem dem Approximationsschritt vorhergehenden Messschritt, der in Fig. 3 ebenfalls nicht gezeigt ist, wird der Wirkungsgrad η_{N} des Energieversorgungsmoduls 4 für mehrere Modularbeitspunkte ermittelt. Diese Modularbeitspunkte sind jeweils durch eine Ausgangsspannung U und einen Ausgangsstrom I_{NM} definiert. Der Approximationsschritt wird durchgeführt, um den Wirkungsgrad η_{N} des Energieversorgungsmoduls 4 auch für solche Modularbeitspunkte angeben zu können, für welche keine Messungen in dem Messschritt durchgeführt wurden. Die Approximation erfolgt mittels linearer Approximation oder quadratischer Approximation oder kubischer Approximation, wobei auf diese Möglichkeiten noch eingegangen werden wird.

In dem Approximationsschritt erfolgt zunächst in einem ersten Teilschritt 101 die Approximation von Verlusten für eine vorgegebene Ladespannung U und einen vorgegebenen Ladestrom I_{L} anhand von Messdaten von Ausgangsspannung U, Ausgangsstrom I_{NM} und Wirkungsgrad η_{N} der Energieversorgungsmodule 4. In einem zweiten Teilschritt 102 wird für diesen Arbeitspunkt eine Optimierung durchgeführt, als deren Ergebnis 103 eine Verteilung des Ladestroms I_{L} auf die parallel geschalteten Energieversorgungsmodule 4 ermittelt wird, bei welcher der Gesamtwirkungsgrad der Ladevorrichtung 3 - also die Parallelschaltung der Energieversorgungsmodule 4 - maximal ist. Diese Ermittlung kann mit Methoden der linearen oder nichtlinearen, insbesondere quadratischen, Programmierung oder symmetrischer Verlustberechnung oder genetischer Algorithmen erfolgen. Der erste Teilschritt 101 und der zweite Teilschritt 102 werden iterativ für mehrere Arbeitspunkte durchgeführt, vgl. Schleife 104. Als Ergebnis 106 des Optimierungsschritts 105 wird für mehrere vorgegebene Arbeitspunkte jeweils eine Verteilung des Ladestroms I_{L} auf die parallel geschalteten Energieversorgungsmodule 4 bereitgestellt, bei welcher die Ladevorrichtung 3 einen maximalen Gesamtwirkungsgrad aufweist.

Die Fig. 4 zeigt einen Trainingsschritt 107, der bevorzugt vor dem eigentlichen Laden des Energiespeichers 2 durchgeführt wird. Auf Grundlage der in dem Optimierungsschritt 105 ermittelten Verteilung, also dem Ergebnis 106 der Optimierung für mehrere Arbeitspunkte der Ladevorrichtung 3, wird in dem Trainingsschritt 107 ein Klassifizierer trainiert, der während des Ladens zur Auswahl der geeigneten Verteilung herangezogen werden kann. Als Ergebnis 108 des Trainingsschritts 107 wird der trainierte Klassifizierer in der Ladevorrichtung 3, insbesondere in einer Speichereinheit der Ladevorrichtung 3, gespeichert. Alternativ kann das Ergebnis 106 der Optimierung in einer Tabelle gespeichert werden, die beim späteren Laden ausgelesen werden kann. Gemäß einer weiteren Alternative kann der Optimierungsschritt 105 während des Ladens des Energiespeichers 2 durchgeführt werden. Insofern können der Optimierungsschritt 105 und der Ladeschritt durchgeführt werden, während der Energiespeicher 2 mit der Ladevorrichtung 3 verbunden ist.

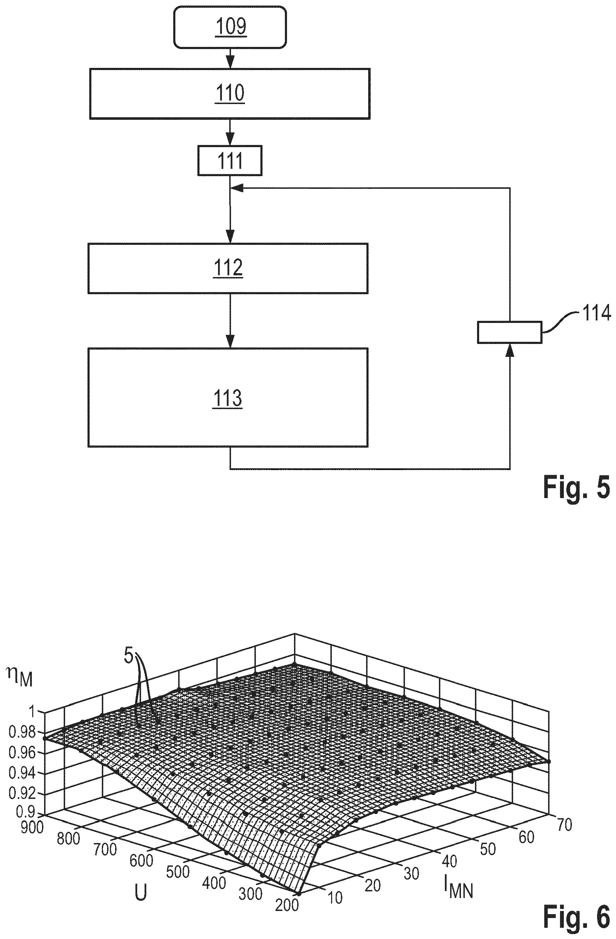

Anhand der Darstellung in Fig. 5 soll nunmehr der Ablauf des Ausführungsbeispiels des Verfahrens beschrieben werden, wenn der Energiespeicher 2 mit der Ladevorrichtung 3 verbunden ist. Ausgehend von einem Startzustand 109 wird der Klassifizierer in einem Konfigurationsschritt 110 initialisiert. Dies kann beispielsweise dadurch erfolgen, dass das Ergebnis 108 des Trainingsschritts 107 aus einer Speichereinheit der Ladevorrichtung 3 ausgelesen wird. In einem Initialisierungsschritt 111 wird eine Schleifenvariable auf einen Startwert gesetzt.

In einem Abfrageschritt 112 wird der aktuelle Arbeitspunkt der Ladevorrichtung 3 ermittelt, d.h. der tatsächliche Ladestrom I_{L} und die tatsächliche Ladespannung U. In einem dem Abfrageschritt 112 nachfolgenden Ladeschritt 113 wird in Abhängigkeit von dem Ladestrom I_{L} und der Ladespannung U eine Verteilung des Ladestroms I_{L} auf die einzelnen Energieversorgungsmodule 4 der Ladevorrichtung 3 ausgewählt, bei welcher die Ladevorrichtung 3 einen maximalen Gesamtwirkungsgrad aufweist. Bevorzugt erfolgt die Auswahl dieser Verteilung mittels des in dem Trainingsschritts 107 trainierten Klassifizierers, der beispielsweise als Entscheidungsbaum-Klassifizierer ausgestaltet sein kann. Alternativ kann die Auswahl durch Auslesen einer in der Ladevorrichtung 3 gespeicherten Tabelle erfolgen.

Wie in Fig. 5 durch die Schleife 114 angedeutet ist, werden der Abfrageschritt 112 und der Ladeschritt 113 periodisch wiederholt, sodass die Verteilung des Ladestroms I_{L} auf die Energieversorgungsmodule 4 bei etwaigen Änderungen des Arbeitspunkts der Ladevorrichtung 3 entsprechend nachgeführt werden kann.

In Fig. 6 sind mehrere Messwerte des Wirkungsgrads eines Energieversorgungsmoduls 4 in Abhängigkeit von Ausgangsspannung U und Ausgangsstrom I_{MN} des Energieversorgungsmoduls 4 dargestellt, wie sie beispielsweise in einem Messschritt des erfindungsgemäßen Verfahrens ermittelt werden können.

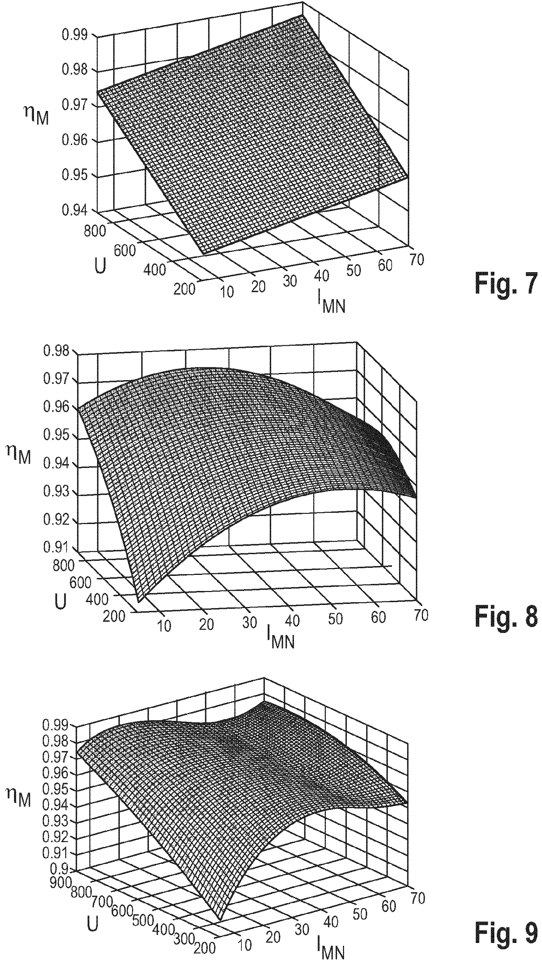

Die Fig. 7 zeigt eine lineare Approximation des Wirkungsgrads aus Fig. 6. In Fig. 8 ist eine quadratische Approximation des Wirkungsgrads aus Fig. 6 und in Fig. 9 eine kubische Approximation des Wirkungsgrads aus Fig. 6 dargestellt.

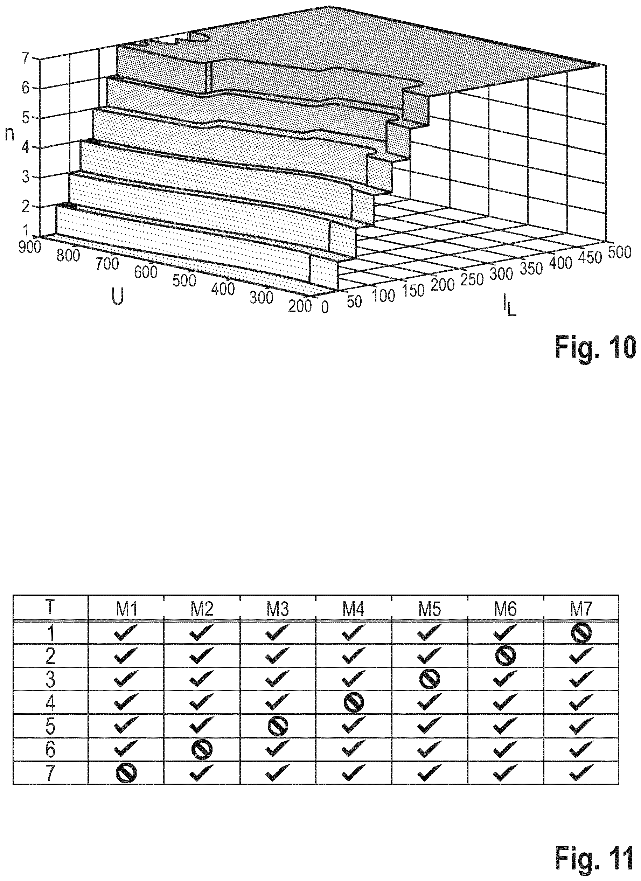

In der Fig. 10 ist eine dreidimensionale Darstellung einer Tabelle mit ca. 1400 x 4900 Einträgen gezeigt, in welcher das in dem Optimierungsschritt 105 ermittelte Optimierungsergebnis enthalten ist, wobei in dem Optimierungsschritt 105 eine Anzahl n aktiver Energieversorgungsmodule 4 ermittelt wird, die unter Vernachlässigung von Alterungseffekten und Bauteiltoleranzen einen identischen Ausgangsstrom I_{M1}, I_{M2}, I_{NM} aufweisen. Insofern wird der Ladestrom I_{L} zu gleichen Teilen auf eine Anzahl n von aktiven Energieversorgungsmodulen 4 verteilt. In der Tabelle muss daher lediglich die Anzahl n der aktiven Energieversorgungsmodule 4 gespeichert werden.

Optional kann bei dem Ausführungsbeispiel des erfindungsgemäßen Verfahrens in dem Ladeschritt 113 der tatsächliche Gesamtwirkungsgrad der Ladevorrichtung 3 bzw. der tatsächliche Wirkungsgrad der einzelnen Energieversorgungsmodule 4 ermittelt werden. Die Ermittlung des Wirkungsgrads η_{N} der einzelnen Energieversorgungsmodule 4 können mehrere Messungen des Ladestroms I_{L} und der Ladespannung U der Ladevorrichtung 3 durchgeführt werden, wobei unterschiedliche Energieversorgungsmodule 4 aktiviert sind. Aus diesen Messungen kann dann der Ausgangsstrom I_{MN} und die Ausgangsspannung U bzw. der Wirkungsgrad η_{N} der einzelnen Energieversorgungsmodule 4 ermittelt werden. Ein möglicher Ablaufplan für eine solche Messsequenz ist am Beispiel einer Ladevorrichtung 3 mit insgesamt sieben Energieversorgungsmodulen M1, M2, M3, M4, M5, M6, M7 in Fig. 11 gezeigt. Hierbei ist der Betriebszustand der einzelnen Energieversorgungsmodule M1, M2, M3, M4, M5, M6, M7 in sieben aufeinanderfolgenden Zeitschritten T dargestellt, wobei ein Haken ein aktives Energieversorgungsmodul M1, M2, M3, M4, M5, M6, M7 und ein durchgestrichener Kreis ein inaktives Energieversorgungsmodul M1, M2, M3, M4, M5, M6, M7 kennzeichnet. Nachdem diese sieben Messungen durchgeführt sind, kann der Wirkungsgrad jedes einzelnen Energieversorgungsmoduls M1, M2, M3, M4, M5, M6, M7 berechnet werden. Durch die Ermittlung des tatsächlichen Wirkungsgrads der Energieversorgungsmodule M1, M2, M3, M4, M5, M6, M7 ist es möglich, die Güte der einzelnen Energieversorgungsmodule M1, M2, M3, M4, M5, M6, M7 zu ermitteln und/oder ein Alterungsverhalten der einzelnen Energieversorgungsmodule M1, M2, M3, M4, M5, M6, M7 zu beobachten und/oder mögliche Ausfälle einzelner Energieversorgungsmodule M1, M2, M3, M4, M5, M6, M7 vorherzusagen.

## Patentansprüche

1. Verfahren zum Laden eines Energiespeichers (2) eines Fahrzeugs (1) mit einer Ladevorrichtung (3), die in einem Arbeitspunkt einen Ladestrom (I_{L}) und eine Ladespannung (U) bereitstellt, wobei die Ladevorrichtung (3) mehrere parallel geschaltete, baugleiche Energieversorgungsmodule (4) aufweist, **gekennzeichnet durch** die folgenden Verfahrensschritte:
- In einem Approximationsschritt wird eine Approximation des Wirkungsgrads (η_{N}) eines einzelnen Energieversorgungsmoduls (4) in Abhängigkeit von einer Ausgangsspannung (U) und einem Ausgangsstrom (I_{M1}, I_{M2}, I_{MN}) des Energieversorgungsmoduls (4) ermittelt, wobei die Approximation mittels linearer Approximation oder quadratischer Approximation oder kubischer Approximation erfolgt;
- In einem dem Approximationsschritt nachfolgenden Optimierungsschritt (105) wird für mehrere vorgegebene Arbeitspunkte jeweils eine Verteilung des Ladestroms (I_{L}) auf die parallel geschalteten Energieversorgungsmodule (4) ermittelt, bei welcher die Ladevorrichtung (3) einen maximalen Gesamtwirkungsgrad aufweist, wobei die Optimierung des Gesamtwirkungsgrades auf Grundlage der im Approximationsschritt ermittelten Approximation des Wirkungsgrads (η_{N}) eines einzelnen Energieversorgungsmoduls (4) erfolgt, wobei als Startpunkt für die Optimierung eine Anzahl (n) aktiver Energieversorgungsmodule (4) ermittelt und der Ladestrom (I_{L}) zu gleichen Teilen auf die aktiven Energieversorgungsmodule (4) aufgeteilt wird, wobei die Verteilung des Ladestroms (I_{L}) auf die aktiven Energieversorgungsmodule (4) ausgehend von dem Startpunkt mittels eines Gradientenverfahrens ermittelt wird;
- In einem dem Optimierungsschritt (105) nachfolgenden Ladeschritt (113) wird in Abhängigkeit von einem vorgegebenen Ladestrom (I_{L}) und einer vorgegebenen Ladespannung (U) eine Verteilung des Ladestroms (I_{L}) auf die einzelnen Energieversorgungsmodule (4) der Ladevorrichtung (3) ausgewählt, bei welcher die Ladevorrichtung (3) einen maximalen Gesamtwirkungsgrad aufweist.

2. Verfahren nach Anspruch 1, **dadurch gekennzeichnet, dass** in einem dem Approximationsschritt vorhergehenden Messschritt der Wirkungsgrad (η_{N}) des Energieversorgungsmoduls (4) für mehrere Modularbeitspunkte ermittelt wird, wobei die Modularbeitspunkte jeweils eine Ausgangsspannung (U) und einen Ausgangsstrom (I_{M1}, I_{M2}, I_{MN}) des Energieversorgungsmoduls (4) umfassen.

3. Verfahren nach einem der vorhergehenden Ansprüche, **dadurch gekennzeichnet, dass** in dem Optimierungsschritt (105) eine Anzahl [n] aktiver Energieversorgungsmodule (4) ermittelt wird, wobei die aktiven Energieversorgungsmodule (4) einen identischen Ausgangsstrom (I_{M1}, I_{M2}, I_{MN}) aufweisen.

4. Verfahren nach einem der vorhergehenden Ansprüche, **dadurch gekennzeichnet, dass** in dem Optimierungsschritt (105) eine Tabelle angelegt wird, die eine Verteilung des Ladestroms (I_{L}) auf die parallel geschalteten Energieversorgungsmodule (4) für verschiedene Arbeitspunkte umfasst, wobei die Auswahl in dem Ladeschritt (113) anhand der Tabelle erfolgt.

5. Verfahren nach einem der Ansprüche 1 bis 4, **dadurch gekennzeichnet, dass** in dem Ladeschritt [113] die Auswahl der Verteilung des Ladestroms (I_{L}) auf die einzelnen Energieversorgungsmodule (4) mittels eines Klassifizierers, insbesondere eines Entscheidungsbaum-Klassifizierers, erfolgt.

6. Verfahren nach einem der vorhergehenden Ansprüche, **dadurch gekennzeichnet, dass** in dem Ladeschritt (113) der tatsächliche Gesamtwirkungsgrad der Ladevorrichtung (3) ermittelt wird.

7. Verfahren nach einem der vorhergehenden Ansprüche, **dadurch gekennzeichnet, dass** in dem Ladeschritt (113) der tatsächliche Wirkungsgrad (η_{N}) der einzelnen Energieversorgungsmodule (4) ermittelt wird.

## Claims

1. Method for charging an energy store (2) of a vehicle (1) using a charging apparatus (3) which provides a charging current (I_{L}) and a charging voltage (U) at an operating point, wherein the charging apparatus (3) has a plurality of structurally identical energy supply modules (4) connected in parallel, **characterized by** the following method steps:
- in an approximation step, an approximation of the efficiency (η_{N}) of an individual energy supply module (4) is determined on the basis of an output voltage (U) and an output current (I_{M1}, I_{M2}, I_{MN}) of the energy supply module (4), wherein the approximation is carried out by means of linear approximation or quadratic approximation or cubic approximation;
- in an optimization step (105) which follows the approximation step, a distribution of the charging current (I_{L}) to the energy supply modules (4) connected in parallel, in the case of which the charging apparatus (3) has a maximum overall efficiency, is respectively determined for a plurality of predefined operating points, wherein the overall efficiency is optimized on the basis of the approximation of the efficiency (η_{N}) of an individual energy supply module (4), as determined in the approximation step, wherein a number (n) of active energy supply modules (4) is determined as the starting point for the optimization and the charging current (I_{L}) is equally divided among the active energy supply modules (4), wherein the distribution of the charging current (I_{L}) to the active energy supply modules (4) starting from the starting point is determined by means of a gradient method;
- in a charging step (113) which follows the optimization step (105), a distribution of the charging current (I_{L}) to the individual energy supply modules (4) of the charging apparatus (3), in the case of which the charging apparatus (3) has a maximum overall efficiency, is selected on the basis of a predefined charging current (I_{L}) and a predefined charging voltage (U).

2. Method according to Claim 1, **characterized in that**, in a measurement step preceding the approximation step, the efficiency (η_{N}) of the energy supply module (4) is determined for a plurality of module operating points, wherein the module operating points each comprise an output voltage (U) and an output current (I_{M1}, I_{M2}**,** I_{MN}) of the energy supply module (4).

3. Method according to one of the preceding claims, **characterized in that**, in the optimization step (105), a number (n) of active energy supply modules (4) is determined, wherein the active energy supply modules (4) have an identical output current (I_{M1}, I_{M2}**,** I_{MN}).

4. Method according to one of the preceding claims, **characterized in that** a table is created in the optimization step (105), which table comprises a distribution of the charging current (I_{L}) to the energy supply modules (4) connected in parallel for different operating points, wherein the selection is made in the charging step (113) on the basis of the table.

5. Method according to one of Claims 1 to 4, **characterized in that** the distribution of the charging current (I_{L}) to the individual energy supply modules (4) is selected in the charging step (113) by means of a classifier, in particular a decision tree classifier.

6. Method according to one of the preceding- claims, **characterized in that** the actual overall efficiency of the charging apparatus (3) is determined in the charging step (113).

7. Method according to one of the preceding claims, **characterized in that** the actual efficiency (η_{N}) of the individual energy supply modules (4) is determined in the charging step (113).

## Revendications

1. Procédé de charge d'un accumulateur d'énergie (2) d'un véhicule (1) comprenant un dispositif de charge (3) qui fournit un courant de charge (I_{L}) et une tension de charge (U) en un point de fonctionnement, dans lequel le dispositif de charge (3) comporte plusieurs modules d'alimentation en énergie (4) de construction identique et connectés en parallèle, **caractérisé par** les étapes de procédé suivantes :
- lors d'une étape d'approximation, une approximation du degré de rendement (η_{N}) d'un module d'alimentation en énergie (4) individuel est déterminée en fonction d'une tension de sortie (U) et d'un courant de sortie (I_{M1}, I_{M2}**,** I_{MN}) du module d'alimentation en énergie (4), dans lequel l'approximation est effectuée au moyen d'une approximation linéaire ou d'une approximation quadratique ou d'une approximation cubique ;
- lors d'une étape d'optimisation (105) suivant l'étape d'approximation, une répartition du courant de charge (I_{L}) entre les modules d'alimentation en énergie (4) connectés en parallèle est respectivement déterminée pour une pluralité de points de fonctionnement prédéterminés, répartition pour laquelle le dispositif de charge (3) présente un degré de rendement global maximal, dans lequel l'optimisation du degré de rendement global est effectuée sur la base de l'approximation, déterminée lors de l'étape d'approximation, du degré de rendement (η_{N}) d'un module d'alimentation en énergie (4) individuel, dans lequel un nombre (n) de modules d'alimentation en énergie (4) actifs est déterminé comme point de départ pour l'optimisation, et le courant de charge (I_{L}) est réparti à parts égales entre les modules d'alimentation en énergie (4) actifs, dans lequel la répartition du courant de charge (I_{L}) entre les modules d'alimentation en énergie (4) actifs est déterminée à partir du point de départ au moyen d'une méthode du gradient ;
- lors d'une étape de charge (113) suivant l'étape d'optimisation (106), une répartition du courant de charge (I_{L}) entre les modules d'alimentation en énergie (4) individuels du dispositif de charge (3) est sélectionnée en fonction d'un courant de charge (I_{L}) prédéterminé et d'une tension de charge (U) prédéterminée, répartition pour laquelle le dispositif de charge (3) présente un degré de rendement global maximal.

2. Procédé selon la revendication 1, **caractérisé en ce que**, lors d'une étape de mesure précédant l'étape d'approximation, le degré de rendement (η_{N}) du module d'alimentation en énergie (4) est déterminé pour plusieurs points de fonctionnement du module, dans lequel les points de fonctionnement du module comprennent respectivement une tension de sortie (U) et un courant de sortie (I_{M1}, I_{M2}**,** I_{MN}) du module d'alimentation en énergie (4).

3. Procédé selon l'une quelconque des revendications précédentes, **caractérisé en ce que**, lors de l'étape d'optimisation (105), un nombre (n) de modules d'alimentation en énergie (4) actifs est déterminé, dans lequel les modules d'alimentation en énergie (4) actifs présentent un courant de sortie identique (I_{M1}, I_{M2}**,** I_{MN}) identique.

4. Procédé selon l'une quelconque des revendications précédentes, **caractérisé en ce que**, lors de l'étape d'optimisation (105), une table qui comprend une répartition du courant de charge (I_{L}) entre les modules d'alimentation en énergie (4) connectés en parallèle pour différents points de fonctionnement est créée, dans lequel la sélection est effectuée lors de l'étape de charge (113) sur la base de la table.

5. Procédé selon l'une quelconque des revendications 1 à 4, **caractérisé en ce que**, lors de l'étape de charge (113), la sélection de la répartition du courant de charge (I_{L}) entre les modules d'alimentation en énergie (4) individuels est effectuée au moyen d'un classificateur, en particulier d'un classificateur à arbre de décision.

6. Procédé selon l'une quelconque des revendications précédentes, **caractérisé en ce que**, lors de l'étape de charge (113), le degré de rendement global réel du dispositif de charge (3) est déterminé.

7. Procédé selon l'une quelconque des revendications précédentes, **caractérisé en ce que**, lors de l'étape de charge (113), le degré de rendement réel' (η_{N}) des différents modules d'alimentation en énergie (4) est déterminé.
